# EUROPÄISCHE PATENTSCHRIFT

(11) **EP 0 255 139 B1**
(45) Veröffentlichungstag und Bekanntmachung des Hinweises auf die Patenterteilung: **08.09.1993**
(21) Anmeldenummer: 87111062.3
(22) Anmeldetag: 30.07.1987
(51) Int. Cl.: B60Q 1/04

(54) **Kraftfahrzeug, insbesondere Personenkraftwagen, mit in die flach verlaufende Fahrzeugbugdeckwand eingelassen angeordneten Scheinwerfern**
Vehicle with headlights incorporated in the flat front body panel
Véhicule avec phares incorporés dans la partie avant plate de la carrosserie

(30) Priorität: 31.07.1986 DE 3625938
(43) Veröffentlichungstag der Anmeldung: 03.02.1988
(73) Patentinhaber: Bayerische Motoren Werke Aktiengesellschaft, 80788 München (DE)
(72) Erfinder: Blödorn, Klaus, Dipl.-Ing., D-8000 München 50 (DE); Lagaay, Harm, D-8036 Herrsching (DE); Pregl, Alexander, Dipl.-Ing., D-8000 München 50 (DE)
(74) Vertreter: Draeger, Karlfried

(56) Entgegenhaltungen:
- FR-A- 2 566 721
- US-A- 3 814 928
- US-A- 4 556 931
- DE-ZEITSCHRIFT AUTO, MOTOR UND SPORT, Band 7/1984, Seite 15; "Neues Scheinwerfersystem für den Audi 300"

## Beschreibung

Die Erfindung betrifft ein Kraftfahrzeug, insbesondere Personenkraftwagen, nach dem Oberbegriff des Anspruchs 1.

Bei Kraftfahrzeugen ist es bekannt, die Hauptscheinwerfer für Fern- und Abblendlicht in einer vorderen Wand des Fahrzeugbugs, die senkrecht oder leicht geneigt verlaufen kann, eingelassen anzuordnen und dabei die aus Preßglas bestehenden Scheinwerferstreuscheiben dem im wesentlichen steilen Frontverlauf des Fahrzeugs anzupassen. Bei Kraftfahrzeugen mit in aerodynamisch günstiger Weise nach vorne bis auf eine verhältnismäß geringe Höhe über der Fahrbahn abfallender Deckwand des Fahrzeugvorbaues, wie sie bei sportlichen Personenkraftwagen, insbesondere Zweisitzern, häufig anzutreffen ist, ist es ferner bekannt, als Hauptscheinwerfer Klappscheinwerfer oder in eine niedrige vordere Wand des Fahrzeugbugs oder in die im wesentlichen flache Karosseriedeckwand eingelassene Scheinwerfer in fester Anordnung vorzusehen. Fest angeordnete Scheinwerfer bei Fahrzeugen mit stark abfallender Vorbaudeckwand können durch bewegbare Klappen aus lichtundurchlässigem Material zumindest teilweise abgedeckt werden (DE-OS 27 54 315, DE-OS 28 13 035, DE-PS 33 05 169, DE-OS 34 42 042).

Bei einem bekannten Kraftfahrzeug der eingangs genannten Art, bei dem die Scheinwerfer in die flach verlaufende Vorbaudeckwand eingelassen sind, sind die bewegbaren Klappen, die in der Abdeckstellung dem Frontverlauf des Fahrzeugs folgen, für das von den Scheinwerfern ausgesandte Licht so weit durchlässig, daß die Scheinwerfer als Lichthupe benutzt werden können, müssen aber wegen ihrer begrenzten Lichtdurchlässigkeit für die Ausstrahlung von Dauerlicht ebenso wie die oben erwähnten bekannten Klappen aus lichtundurchlässigem Material aus dem Scheinwerferlichtkegel heraus in die Freigabestellung geschwenkt werden, so daß sie den Lichtaustritt nicht behindern (DE-OS 28 53 156). Die bekannte Anordnung ist aufwendig. Mit ihr sind während der Zeit, in der mit Dauerlicht gefahren wird und mithin die Abdeckscheiben in die Freigabestellung verschwenkt sind, wesentliche Nachteile verbunden. Zu diesen gehören die durch die Unstetigkeiten in der Vorbaudeckwand hervorgerufenen Störungen der Luftströmung und der dadurch verursachte erhöhte Fahrwiderstand. Außerdem stellen die oberen Hinterkanten der Scheinwerferausnehmungen Gefährdungen insbesondere für Fußgänger und Zweiradfahrer dar, die sich bei einem etwaigen Unfall an diesen Kanten verletzen können. Ferner kann in die geöffneten Scheinwerfertaschen, die unter den Scheinwerferausnehmungen vorhanden sind, verhältnismäßig leicht Schmutz, beispielsweise Laub, gelangen, der möglicherweise die Funktion der Scheinwerfer beeinträchtigt und, sofern er unter die Abdeckscheiben gelangt, nur schwierig aus den Scheinwerfertaschen zu entfernen ist. Zudem wirken die geöffneten Scheinwerfertaschen stilistisch unschön. Auch während der Zeit, in der sich die Abdeckscheiben in der Abdeckstellung befinden, sind erhebliche Nachteile vorhanden. Zu diesen gehören die Störungen in der Luftströmung, die sich an den Rändern der Abdeckscheiben ergeben, die wegen der Gewährleistung der Verschwenkbarkeit rundum einen verhältnismäßig großen Abstand von den jeweils benachbarten Rändern der Vorbaudeckwand aufweisen müssen. Die Abdeckscheiben, die nur durch die an dem vorderen Rand der Abdeckscheiben angreifenden Verstelleinrichtungen in der Abdeckstellung gehalten werden, können leicht in Schwingungen geraten, die sowohl durch den Fahrtwind als auch durch Schwingungen des Fahrzeugkörpers hervorgerufen sein können. Dies hat einen erhöhten Fahrwiderstand und möglicherweise Windgeräusche und auch Klappergeräusche zur Folge. Bei einer Funktionsbeeinträchtigung der Abdeckscheiben-Verstelleinrichtung, durch welche ein Verschwenken auch nur einer der Abdeckscheiben in die Freigabestellung behindert wird, sind vor einer Fahrt mit Dauerlicht u.U. erhebliche Umrüstarbeiten erforderlich. Darüber hinaus erfordert die gesamte Anordnung einen erheblichen Bauraum.

Der Erfindung liegt die Aufgabe zugrunde, ein Kraftfahrzeug der eingangs genannten Art zu schaffen, bei dem im Bereich der Scheinwerfer mit einfachen Mitteln sowohl die aerodynamischen und ästhetischen Anforderungen als auch die Forderungen nach Leichtbau, geringem Bauvolumen und Sicherheit erfüllt sind und eine einwandfreie Ausstrahlung des Scheinwerferlichts auch bei flach angeordneter Abdeckscheibe ermöglicht ist.

Die Lösung dieser Aufgabe ist im Anspruch 1 angegeben. Durch sie wird erreicht, daß einerseits trotz flachen Verlaufs der Fahrzeugbugdeckwand wegen der geringen Aussenmaße des Ellipsoidscheinwerfers die Scheinwerferausnehmung verhältnismäßig klein gehalten sein kann und andererseits eine der Fahrzeugkontur angepaßte gut lichtdurchlässige ständige Scheinwerferabdeckung gegeben ist.

Es ist zwar bekannt, bei Kraftfahrzeugen dreiachsige Ellipsoidscheinwerfer (z.B. DE-OS 32 41 826), die auch als Projektionsscheinwerfer bezeichnet werden, als Scheinwerfer für Abblendlicht neben herkömmlichen Paraboloid-Scheinwerfern für Fernlicht einzusetzen (DE-Zeitschrift Krafthand, 1983, Heft 19, Seiten 1355 bis 1358; CH-Zeitung Automobil Revue, Nr. 47 vom 17.11.1983, Seite 57; DE-Zeitschrift Auto, Motor und Sport, Heft 7/1984, Seite 15). Dabei ist jedoch vorgesehen, daß die Abdeckscheibe nur eine Neigung von maximal 45° gegenüber der Senkrechten haben darf. Demgegenüber ermöglicht die Erfindung, eine fest angeordnete Abdeckscheibe mit einer Neigung gegenüber der Senkrechten von 60° und mehr vorzusehen.

Besonders vorteilhaft ist, die Abdeckscheibe aus Walzglas zu bilden. Dies ermöglicht nämlich, Scheiben aus Flachglas zu verwenden, das nach dem Floatglas-Verfahren, bei dem die Glasschmelze auf ein sogenanntes Floatbad (flüssiges Zinn) aufschwimmt, gegossen worden ist und demgemäß parallele Oberflächen von sehr hoher Güte (unten Zinnbad-Oberfläche, oben Oberfläche durch Feuerpolitur) aufweist.

Die Abdeckscheibe ist, insbesondere bei Verwendung von Walzglas, vorteilhaft nur in einer Ebene gebogen ausgebildet, wodurch eine günstige Herstellung und Montage erzielt wird. Es ist daher besonders zweckmäßig, die Außenkontur des Fahrzeugbugs in dem Bereich einer Scheinwerferausnehmung dem Verlauf der Abdeckscheibe entsprechend, also im wesentlichen eben oder in nur einer Ebene gekrümmt auszubilden. Dies ergibt eine besonders günstige Integration der Abdeckscheibe in die Fahrzeugbugdeckwand.

Die Abdeckscheibe kann aber auch eine leicht sphärische Krümmung aufweisen.

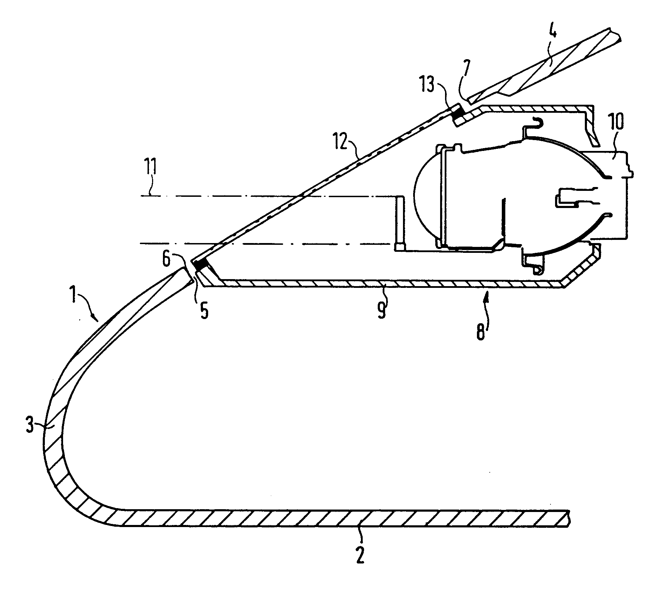

In der Zeichnung ist ein Ausführungsbeispiel der Erfindung schematisch dargestellt, und zwar zeigt die einzige Figur einen lotrechten Schnitt in Fahrzeuglängsrichtung durch den Bug eines nicht weiter dargestellten sportlichen Personenkraftwagens in dem Bereich eines Scheinwerfers für Abblendlicht.

Der Fahrzeugbug 1 ist verhältnismäßig niedrig ausgebildet. Er weist eine im wesentlichen ebene waagerecht verlaufende Fahrzeugbugbodenwand 2 auf, an die sich mit einem gerundet ausgebildeten Fahrzeugbugvorderteil 3 eine schräg von vorne nach hinten ansteigende Fahrzeugbugdeckwand 4 anschließt. Die Fahrzeugbugdeckwand 4 ist leicht konvex nach oben gewölbt ausgebildet, so daß ihre Neigung gegenüber der Waagerechten mit zunehmender Höhe allmählich abnimmt.

In der Fahrzeugbugdeckwand 4 ist eine in etwa rechteckige Scheinwerferausnehmung 5 mit einem unteren vorderen Rand 6 und einem oberen hinteren Rand 7 vorhanden, die zumindest annähernd in waagerechter Richtung verlaufen. Die Fahrzeugbugdeckwand 4 ist in dem Bereich der Scheinwerferausnehmung 5 derart geneigt ausgebildet, daß die an die Oberseite der Fahrzeugbugdeckwand 4 angelegte Tangente einen Winkel von etwa 30° mit der Waagerechten einschließt. Demgemäß weist der obere hintere Rand 7 der Scheinwerferausnehmung 5 in waagerechter Richtung einen größeren Abstand als in senkrechter Richtung von dem unteren vorderen Rand 6 der Scheinwerferausnehmung 5 auf.

In die Scheinwerferausnehmung 5 ist von hinten her eine Scheinwerfereinheit 8 eingesetzt, die am Fahrzeugaufbau fest angeordnet ist. Die Scheinwerfereinheit 8 weist ein Scheinwerfergehäuse 9 auf, das im hinteren Bereich einen Scheinwerfer 10 für Abblendlicht und daneben einen nicht dargestellten Scheinwerfer für Fernlicht fest angeordnet aufnimmt. Der Scheinwerfer 10 für Abblendlicht ist als dreiachsiger Ellipsoidscheinwerfer (Projektionsscheinwerfer) ausgebildet. Sein Lichtkegel 11 ist durch strichpunktierte Linien angedeutet. Der Scheinwerfer für Fernlicht weist eine beliebige Bauart auf, kann also als herkömmlicher Paraboloid-Scheinwerfer oder ebenfalls als Projektionsscheinwerfer ausgebildet sein.

Am vorderen Ende ist das Scheinwerfergehäuse 9 durch eine Abdeckscheibe 12 abgeschlossen, die mit einer Dichtung 13 auf dem vorderen Rand des Scheinwerfergehäuses 9 aufliegt. Die Abdeckscheibe 12 ist der Kontur der Fahrzeugbugdeckwand 4 angepaßt leicht konvex nach oben gewölbt ausgebildet. Ihre Oberseite verläuft demgemäß bündig mit der Oberseite der Fahrzeugbugdeckwand 4. Die Abdeckscheibe 12 füllt die Scheinwerferausnehmung 5 bis auf schmale Einpaßfugen an dem unteren vorderen Rand 6 und dem oberen hinteren Rand 7 sowie den beiden Seitenrändern vollständig aus.

Die Abdeckscheibe 12 ist aus Walzglas gebildet und weist infolgedessen zueinander parallele Oberflächen hoher Güte auf. Dies ermöglicht, daß das Scheinwerferlicht trotz der verhältnismäßig flachen Anordnung der Abdeckscheibe 12 ohne wesentliche Reflexionsverluste durch die Abdeckscheibe 12 hindurchtreten kann.

Die beschriebene Anordnung ist beiderseits der Fahrzeuglängsmittelebene spiegelsymmetrisch zu dieser vorgesehen.

Statt der Abdeckscheibe aus Walzglas kann eine aus Kunststoff oder einem anderen Material vorgesehen sein, die entsprechende optische Eigenschaften aufweist.

Bei ausreichend guter Oualität der Abdeckscheibe kann diese noch flacher als bei dem Ausführungsbeispiel angeordnet sein, also einen Winkel mit der Waagrechten einschließen, der kleiner als 30° ist.

### Bezugszeichenliste

- 1: Fahrzeugbug
- 2: Fahrzeugbugbodenwand
- 3: Fahrzeugbugvorderteil
- 4: Fahrzeugbugdeckwand
- 5: Scheinwerferausnehmung
- 6: unterer vorderer Rand
- 7: oberer hinterer Rand
- 8: Scheinwerfereinheit
- 9: Scheinwerfergehäuse
- 10: Scheinwerfer für Abblendlicht
- 11: Lichtkegel
- 12: Abdeckscheibe
- 13: Dichtung

## Patentansprüche

1. Kraftfahrzeug, insbesondere Personenkraftwagen, mit einem Fahrzeugbug, dessen Deckwand schräg von vorne nach hinten ansteigt und der beiderseits der Fahrzeuglängsmittelebene symmetrisch zu dieser in der Fahrzeugbugdeckwand jeweils eine etwa rechteckige Scheinwerferausnehmung aufweist, die einen unteren vorderen Rand und einen oberen hinteren Rand aufweist, deren Abstand voneinander in waagerechter Richtung größer als in senkrechter Richtung ist, hinter der ein Scheinwerfer für Abblendlicht und ein Scheinwerfer für Fernlicht nebeneinander an dem Fahrzeugaufbau fest angeordnet sind und zu deren mit der Außenseite der Fahrzeugbugdeckwand bündiger Abdeckung eine dem Frontverlauf des Fahrzeugs angepaßte lichtdurchlässige Abdeckscheibe vorgesehen ist, **dadurch gekennzeichnet,** daß der Scheinwerfer **(10)** für Abblendlicht als dreiachsiger Ellipsoidscheinwerfer ausgebildet ist und daß in die Scheinwerferausnehmung (5) von hinten her eine Scheinwerfereinheit (8) hineinragt, die an dem Fahrzeugaufbau fest angeordnet ist und ein Scheinwerfergehäuse (9) aufweist, welches den Scheinwerfer (10) für Abblendlicht und den Scheinwerfer für Fernlicht birgt und dessen vordere Wand von der Abdeckscheibe (12) gebildet ist, welche die Scheinwerferausnehmung (5) bis auf schmale Einpaßfugen an dem unteren vorderen Rand (6) und dem oberen hinteren Rand (7) sowie den beiden Seitenrändern vollständig ausfüllt und weitgehend zueinander parallele Oberflächen hoher Güte aufweist.

2. Kraftfahrzeug nach Anspruch 1, dadurch gekennzeichnet, daß die Abdeckscheibe **(12)** aus Walzglas gebildet ist.

3. Kraftfahrzeug nach Anspruch 1, dadurch gekennzeichnet, daß die Abdeckscheibe **(12)** aus Kunststoff gebildet ist.

4. Kraftfahrzeug nach Anspruch 1, 2 oder 3, dadurch gekennzeichnet, daß die Außenkontur des Fahrzeugbugs **(1)** in dem Bereich der Scheinwerferausnehmungen **(5)** im wesentlichen eben oder in nur einer Ebene gekrümmt ausgebildet ist.

5. Kraftfahrzeug nach einem der Ansprüche 1 bis 4, dadurch gekennzeichnet, daß der Scheinwerfer (10) für Abblendlicht und der Scheinwerfer für Fernlicht in dem hinteren Bereich des Scheinwerfergehäuses (9) angeordnet sind.

6. Kraftfahrzeug nach einem der vorhergehenden Ansprüche, dadurch gekennzeichnet, daß die Abdeckscheibe (12) mit einer Dichtung (13) auf dem vorderen Rand des Scheinwerfergehäuses (9) aufliegt.

## Claims

1. A motor vehicle, more especially a passenger vehicle, comprising a front body panel which slopes upwards to the rear and has an approximately rectangular aperture for a headlamp in the front body panel symmetrically on each side of the longitudinal central plane of the vehicle, the recess having a bottom front edge and a top rear edge separated by a distance which is greater in the horizontal direction than in the vertical direction, a headlamp for dimmed light and a headlamp for long-distance light being permanently secured side by side to the vehicle body behind the recess and a light-transmitting cover plate matching the shape of the front of the vehicle being provided for covering the headlamps flush with the outside of the front body panel, characterised in that the headlamp (10) for dimmed light is a triaxial ellipsoidal headlamp and a headlamp unit (8) projects from the rear into the recess (5) and is permanently disposed in the vehicle body and comprises a casing (9) enclosing the headlamp (10) for dimmed light and the headlamp for long-distance light, the front wall of the casing being formed by the cover plate (12), which completely fills the recess (5) apart from narrow fitting-in joints in the bottom front edge (6), the top rear edge (7) and the two side edges, and has substantially parallel surfaces of high quality.

2. A motor vehicle according to claim 1, characterised in that the cover plate (12) is made of rolled glass.

3. A motor vehicle according to claim 1, characterised in that the cover plate (12) is made of plastics.

4. A motor vehicle according to claim 1, 2 or 3, characterised in that the outer contour of the front (1) in the neighbourhood of the recesses (5) is substantially flat or bent in only one plane.

5. A motor vehicle according to any of claims 1 to 4, characterised in that the headlamp (10) for dimmed light and the headlamp for long-distance light are disposed in the rear region of the casing (9).

6. A motor vehicle according to any of the preceding claims, characterised in that the cover plate (12) bears via a seal (13) on the front edge of the casing (9).

## Revendications

1. Véhicule automobile, notamment de tourisme, comportant une façade dont le capot, incliné en montant d'avant en arrière, présente deux découpes symétriques par rapport au plan longitudinal médian du véhicule et sensiblement rectangulaires, dont les bords inférieur avant et supérieur arrière de chacune sont plus éloignés horizontalement que verticalement et derrière chacune desquelles sont montés côte à côte un projecteur d'éclairage code et un projecteur d'éclairage route, fixés à la structure du véhicule et équipés d'une vitre de couverture transparente jointe avec affleurement de sa surface externe à celle du capot dont elle assure la continuité du profil, caractérisé en ce que le projecteur (10) d'éclairage code est du type ellipsoïde à trois axes, l'ouverture (5) est garnie à l'arrière d'un bloc de projection (8) fixé à la structure du véhicule et comportant un boîtier (9) contenant le projecteur (10) d'éclairage code et le projecteur d'éclairage route et dont la paroi avant est formée par la vitre de couverture (12) qui remplit entièrement l'ouverture (5) en laissant de faibles intervalles ajustés le long du bord inférieur avant (6), du bord supérieur arrière (7) ainsi que des deux bords latéraux, les faces entièrement parallèles de cette vitre étant de haute qualité.

2. Véhicule selon la revendication 1, caractérisé en ce que la vitre de couverture (12) est en verre laminé.

3. Véhicule selon la revendication 1, caractérisé en ce que la vitre de couverture (12) est en matière plastique.

4. Véhicule selon la revendication 1, caractérisé en ce que la partie de la façade (1) entourant chacune des ouvertures (5) est plane ou courbée dans un seul plan.

5. Véhicule selon une des revendications 1 à 4, caractérisé en ce que le projecteur (10) d'éclairage code et le projecteur d'éclairage route sont montés à la partie arrière du boîtier (9).

6. Véhicule selon une des revendications précédentes, caractérisé en ce que la vitre de couverture (12) repose par l'intermédiaire d'un joint d'étanchéité (13) sur le bord avant du boîtier (9).
